# EUROPÄISCHE PATENTANMELDUNG

(11) **EP 1 359 353 A2**
(43) Veröffentlichungstag der Anmeldung: **05.11.2003**
(21) Anmeldenummer: 03008526.0
(22) Anmeldetag: 12.04.2003
(51) Int. Cl.: F16J 15/32

(54) **Dichtungsanordnung mit einem Montage- und / oder Transportring**

(30) Priorität: 03.05.2002 DE 10219930
(71) Anmelder: Carl Freudenberg KG, 69469 Weinheim (DE)
(72) Erfinder: Borgio, Mauro, 10064 Pinerolo (TO) (IT); Vignolo, Francesco, 10060 Bibiana (IT)

(57) **Zusammenfassung**

Dichtungsanordnung (1) mit einer Radialwellendichtung (3) sowie einem Montage und / oder Transportring (15) für eine an einem Gehäusedeckel (2) anzubringende Radialwellendichtung (3) mit einem Ring mit einer Ringnut (11) deren Boden (10) radial zur Welle (18) ausgerichtet ist und der eine feststehende parallel zur Welle (18) verlaufende Außenwand (12) hat, gekennzeichnet durch eine am Nutboden (10) angebrachte und unter Federwirkung auf die Lippendichtung (3) gerichtete Innenwand (16).

## Beschreibung

### Technisches Gebiet

Die Erfindung befasst sich mit einer Dichtungsanordnung mit einem Montage- und / oder Transportring für eine an einem Gehäusedeckel anzubringende Radialwellendichtung mit einer Ringnut, deren Boden radial zur Welle ausgerichtet ist und die eine feststehende parallel zur Welle verlaufende Außenwand hat.

Um die Montage von Dichtringen zu erleichtern, werden besondere Einrichtungen benutzt. Dabei können diese Einrichtung auch gleichzeitig als Transportschutz Verwendung finden. Je nach Einsatzgebiet, ob es sich beispielsweise um einen abzudichtenden Ringspalt oder auch um eine Abdichtung an einem Gehäuseverschlussdeckel handelt, sind diese Einrichtungen unterschiedlich ausgebildet.

### Stand der Technik

In der DE 42 24 995 C1 ist eine Montage- und Transportvorrichtung dargestellt, bei der ein zylindrischer Bereich vorhanden ist, der etwa dem Durchmesser der Welle entspricht und auf dem ein axial verschiebbarer Axialansatz zur Fixierung und Montage eines Gehäuseverschlussdeckels beschrieben ist. Die zum Verschlussdeckel gehörende Lippendichtung befindet sich vor ihrem Aufbau auf dem zylinderförmigen Teil C, dessen Außendurchmesser etwa dem Durchmesser der Welle entspricht und sie wird, nachdem der zylindrische Teil an die Welle angelegt ist, durch die verschiebbare Hülse auf die Welle aufgeschoben. Es ist nicht auszuschließen, dass bei einem solchen Vorgehen, die in Richtung auf den abzudichtenden Raum ausgerichtete Lippendichtung beim Aufschieben auf die Welle beschädigt wird.

Durch die EP 0 272 775 B1 ist eine andere Montagevorrichtung bekannt geworden, bei der die Vorrichtung einen zylindrischen Bereich hat, der die Dichtung während des Transports und Lagerung um seinen inneren Umfang herum abstützt, und die außerdem für das Aufschieben der Dichtung auf eine Welle dient. Der Innendurchmesser des zylindrischen Bereichs entspricht dabei dem Außendurchmesser der Welle. Diese Vorrichtung vermeidet eventuelle Beschädigungen der nach innen gerichteten Dichtlippe beim Aufschieben auf die Welle. Sie erfordert jedoch eine hohe Präzision beim Aufsetzen der Montagevorrichtung auf die Welle während des Montagevorgangs.

### Darstellung der Erfindung

Ausgehend von dem bekannten Stand der Technik liegt der vorliegenden Erfindung die Aufgabe zugrunde, eine Montage- und / oder Transporteinrichtung für eine Lippendichtung eines Gehäuseverschlussdeckels zu schaffen, mit der ein sicherer Schutz der Lippendichtung während seiner Lagerung und Transports erreicht wird und die außerdem während des Montagevorgangs einfach zu handhaben ist. Schließlich soll auch bei einer längeren Lagerung der Lippendichtung deren Federverhalten nicht beeinträchtigt werden.

Die Lösung der gestellten Aufgabe erfolgt bei einer Dichtungsanordnung der eingangs genannten Art erfindungsgemäß durch eine gelenkig im Bereich des Nutbodens angebrachte Innenwand. Eine Dichtungsanordnung, wie sie in der EP 0 272 775 B1 gezeigt ist, und die eine Ringnut hat, deren Boden radial zur Welle ausgerichtet ist, und die eine feststehende, parallel zur Welle verlaufende Außenwand besitzt, wird mit einer gelenkig am Nutboden angebrachten unter Federwirkung auf die Lippendichtung gerichtete Innenwand versehen. Die Federwirkung wird so ausgelegt, dass die Dichtlippe nur teilweise in ihre Lage gedrückt wird, die sie nach ihrem Einbau an der Welle anliegend einnehmen soll. Dadurch wird die Dichtlippe geschont, solange sie noch nicht eingebaut ist. Außerdem wird das Ansetzen der Montagevorrichtung an der Stirnseite der Welle erleichtert.

Bevorzugt wird der Montagering aus Kunststoff hergestellt und seine Innenwand integral mit dem Nutboden verbunden. Dieses ergibt einen einstückig ausgebildeten Montagering.

Eine mögliche Ausführungsform besteht darin, dass die Innenwand mit dem Nutboden über ein flexibel gestaltetes Scharnier verbunden ist, welche durch eine Verdünnung des Wandteils im Bereich des Nutbodens gebildet ist. Dadurch wird ein bevorzugter Bereich der Innenwand so ausgebildet, dass er radial nach innen nachgibt.

Die Nachgiebigkeit der Innenwand kann vergrößert werden, wenn sie aus auf ihrem Umfang verteilten Federzungen besteht. Die Anzahl und die Größe der zwischen den Federzungen liegende Schnittöffnungen kann unterschiedlich in Abhängigkeit von dem Material der Lippendichtung und Wellendurchmesser gewählt werden.

Bei der erfindungsgemäßen Dichtungsanordnung wird die Radialwellendichtung mit mindestens einer aus PTFE bestehenden Dichtlippe versehen. Darüber hinaus kann die Radialwellendichtung eine Staublippe aus einem Elastomer aufweisen. Die Dichtlippe und die Staublippe sind während des bestimmungsgemäßen Gebrauchs axial in entgegengesetzter Richtung ausgerichtet.

Zur weiteren Erleichterung des Montagevorgangs ist es zweckmäßig, wenn die Welle stirnseitig mit einer Phase versehen ist, deren Anfangsinnendurchmesser kleiner als der Innendurchmesser des äußeren Randes der Innenwand ist. Beim Aufschieben der Ringnut auf die Welle liegt der äußere Rand der Innenwand auf der Phase auf und wird bis auf den Wellendurchmesser aufgedehnt. Bei Wellen, die an ihrer Stirnseite keine ausreichende Phase haben, kann für den Montagevorrichtung stirnseitig an der Welle ein konischer Führungskegel angebracht werden, welcher in gleicher Weise wie die Ringnut nach dem Montagevorgang von der Welle abgezogen wird.

### Kurzbeschreibung der Zeichnung

Anhand eines in der Zeichnung dargestellten Ausführungsbeispiels wird die Erfindung nachstehend näher erläutert.

Es zeigt:
- Fig. 1: einen Gehäusedeckel mit einer Lippendichtung und einem Montagering im Schnitt und
- Fig. 2 bis 5: den Montagevorgang selbst.

### Ausführung der Erfindung

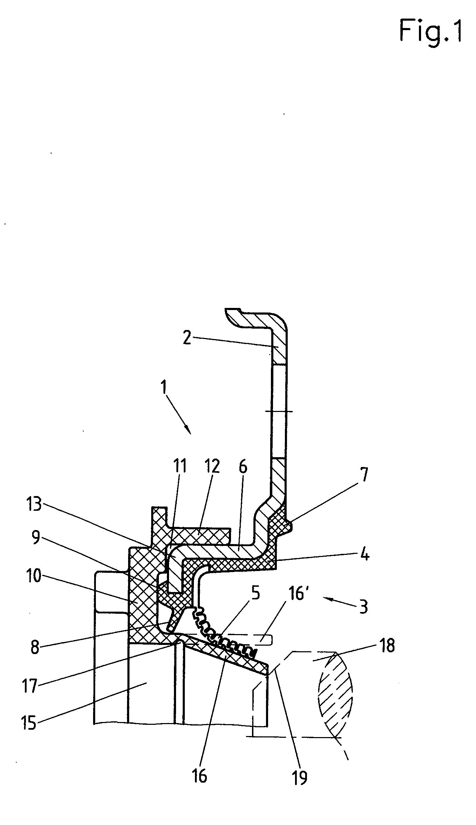

Die in der Fig. 1 gezeigte Dichtungsanordnung 1 besteht aus dem Gehäusedeckel 2 und der daran befestigten Radialwellendichtung 3. Letztere besteht aus einem Basisteil 4, aus einem Elastomer, an dem eine Dichtlippe 5 aus PTFE befestigt ist. Die Dichtlippe 5 hat in an sich bekannter Weise auf ihrer Innenseite Rückfördernuten für Leckageöl. Das Basisteil 4 ist an den Flansch 6 des Gehäusedeckels 2 anvulkanisiert und ist zum nicht näher gezeigten Gehäuse gerichtet mit der statischen Dichtlippe 7 versehen. Fertig montiert liegt die Dichtlippe dichtend am Gehäuse an. Außerdem ist das Basisteil 4 mit der Staublippe 8 versehen. Schließlich hat das Basisteil 4 noch die Ringwulst 9, an der axial der Boden 10 der Ringnut 11 zur Anlage kommt. Die Ringnut 11 ist so ausgebildet, dass ihre Außenwand 12 den Flansch 6 des Gehäusedeckels 2 eng umfasst. Um das Aufschieben der Außenwand 12 auf den Flansch 6 zu erleichtern und auch um der Ringdichtung 3 einen sicheren Halt am Gehäusedeckel 2 zu ermöglichen, hat der Flansch den radial nach innen gerichteten Vorsprung 13. Die durch das Umbördeln entstehende Rundung zwischen dem Flansch 6 und dem Ansatz 13 erleichtert das Aufschieben der Außenwand 12 des Montagerings 15. Der Montagering 15 ist aus Kunststoff und die darin vorhandene Außenwand 12 und Innenwand 16, welche die Ringnut 11 begrenzen, bestehen aus einem Teil. Das Material für die Innenwand 16 ist so gewählt, dass die Innenwand 16 elastisch nachgeben kann. Um diese Nachgiebigkeit zu erhöhen, ist die Innenwand 16 mit dem Nutboden 10 über das flexible Scharnier 17 verbunden. Dieses Scharnier 17 wird durch eine Verdünnung in der Innenwand 16 erreicht. Die gestrichelt eingezeichnete Welle 18 ist mit der Phase 19 versehen, welche das Aufschieben des Montagerings 15 auf die Welle 18 erleichtert. Während des Aufschiebevorgangs wird die Innenwand 16 ausgeweitet, bis sie die ebenfalls eingezeichnete gestrichelte Lage 16' nach dem Aufschieben auf die Welle 18 einnimmt. Dabei wird gleichzeitig die Dichtlippe 5 nach oben gebogen.

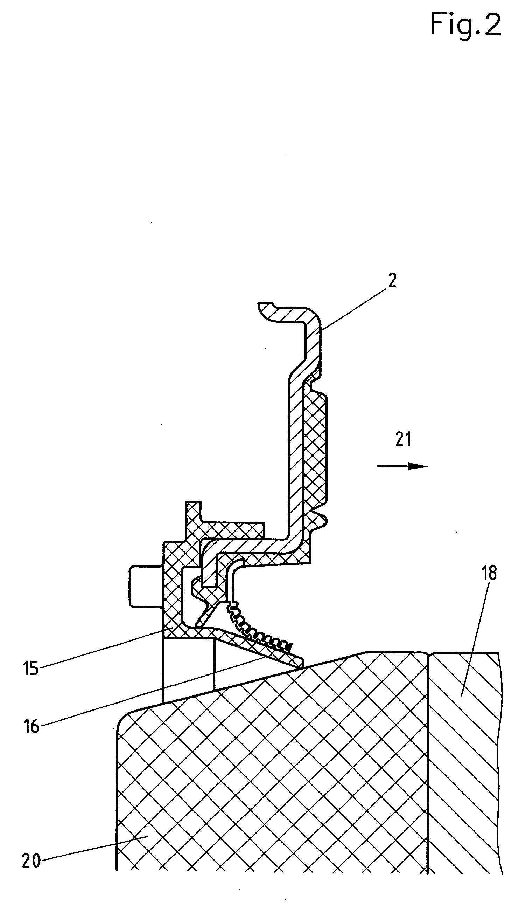

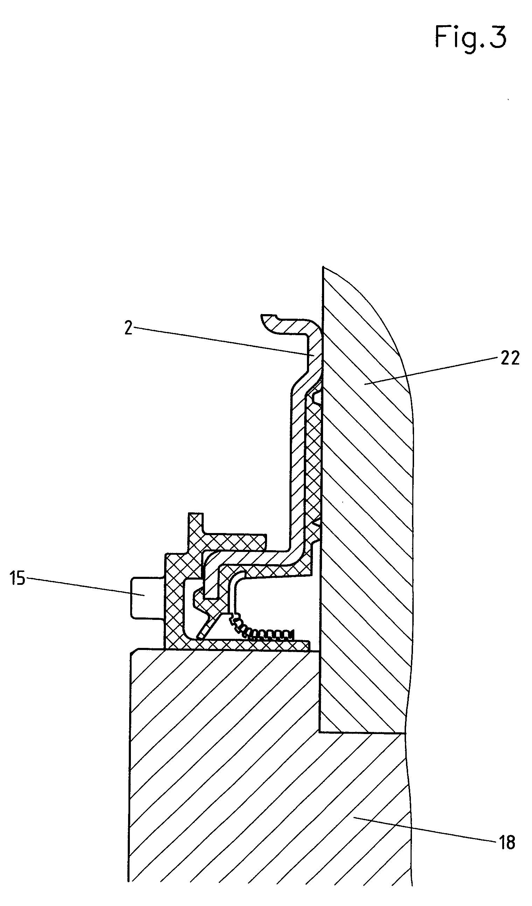

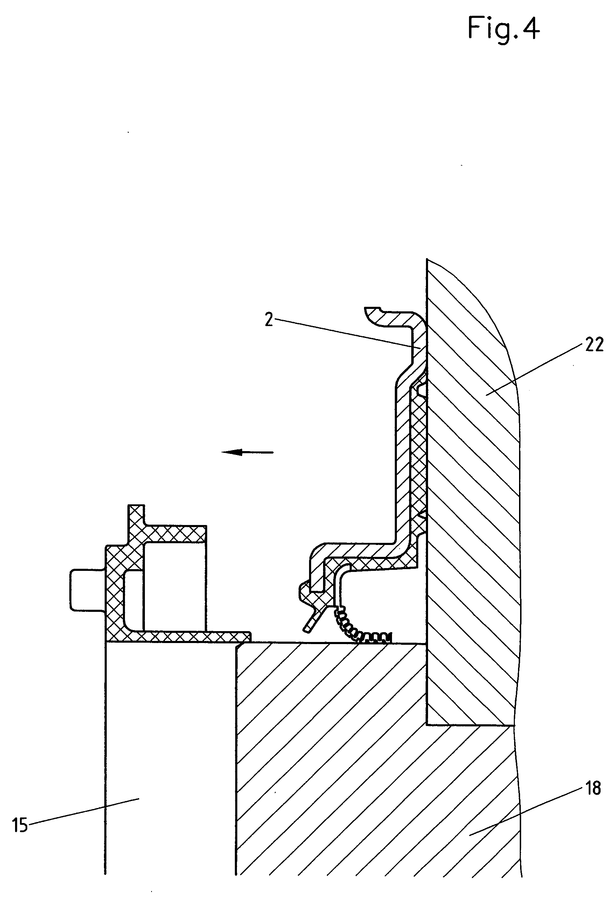

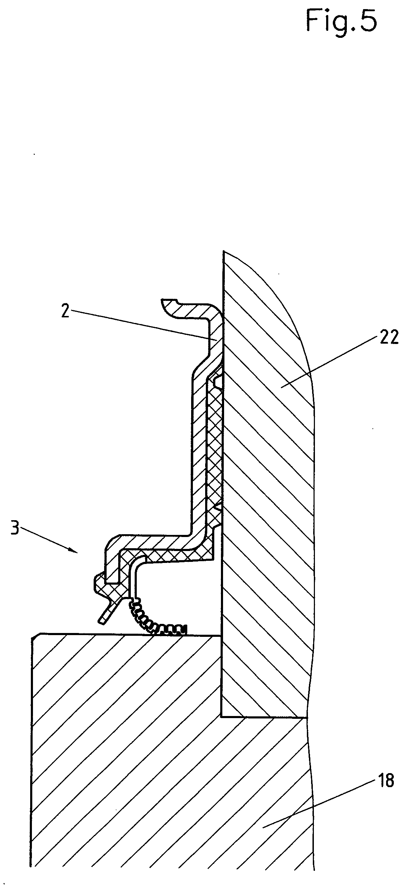

In den Fig. 2 bis 5 ist der Montagevorgang selbst behandelt. Dabei wird die Welle 18 stirnseitig mit dem konischen Führungskegel 20 versehen. Dieses kann über entsprechende Positionierstifte erfolgen. Auf den Führungskegel 20 wird der Montagering 15 mit dem äußeren Rand seiner Innenwand 16 aufgesetzt. Durch den Pfeil 21 ist die Aufschieberichtung für den Gehäusedeckel 2 angezeigt. Aus der Ausgangslage nach Fig. 2 wird der Montagering 15 mit der Dichtung 3 und dem Gehäusedeckel 2 auf die Welle 18 aufgeschoben und kommt, wie in der Fig. 3 dargestellt, am Gehäuse 22 zur Anlage. Die Innenwand 16 umschließt dabei die Lippendichtung 5 vollkommen, so dass sie während des Aufschiebevorgangs nicht beschädigt werden kann. Nach Erreichen der Endlage wird der Montagering 15 von der Welle 18 wieder abgezogen und der Gehäusedeckel 2 einschließlich Radialwellendichtung 3 befindet sich in der vorgegebenen Lage. Die Endsituation zeigt die Fig. 5 nach einem vollständigen Abzug des Montagerings 15.

## Patentansprüche

1. Dichtungsanordnung mit einer Radialwellendichtung sowie einem Montage- und / oder Transportring für eine an einem Gehäusedeckel anzubringende Radialwellendichtung mit einem Ring mit einer Ringnut deren Boden radial zur Welle ausgerichtet ist und der eine feststehende parallel zur Welle verlaufende Außenwand hat, **gekennzeichnet durch** eine am Nutboden (10) angebrachte und unter Federwirkung auf die Lippendichtung (3) gerichtete Innenwand (16).

2. Dichtungsanordnung nach Anspruch 1, **dadurch gekennzeichnet, dass** die Innenwand (16) integral mit dem Nutboden (10) verbunden ist.

3. Dichtungsanordnung nach Anspruch 1 oder 2, **dadurch gekennzeichnet, dass** die Innenwand (16) mit dem Nutboden (10) über ein flexibles Scharnier (17) verbunden ist, welche durch eine Verdünnung des Wandteils gebildet ist.

4. Dichtungsanordnung nach einem der Ansprüche 1 bis 3, **dadurch gekennzeichnet, dass** die Innenwand (16) aus auf ihrem Umfang verteilten Federzungen besteht.

5. Dichtungsanordnung nach einem der Ansprüche 1 bis 4, **dadurch gekennzeichnet, dass** der Montagering (15) aus Kunststoff besteht.

6. Dichtungsanordnung nach einem der Ansprüche 1 bis 5, **dadurch gekennzeichnet, dass** die Radialwellendichtung (3) mindestens eine Dichtlippe (5) aus PTFE hat.

7. Dichtungsanordnung nach einem der Ansprüche 1 bis 6, **dadurch gekennzeichnet, dass** die Radialwellendichtung (3) eine Staublippe (8) aus einem Elastomer hat.

8. Dichtungsanordnung nach Anspruch 7, **dadurch gekennzeichnet, dass** die Staublippe (8) und die Dichtlippe (5) während der bestimmungsgemäßen Verwendung axial in entgegengesetzter Richtung vorstehen.

9. Dichtungsanordnung nach einem der Ansprüche 1 bis 8, **dadurch gekennzeichnet, dass** die Welle (18) stirnseitig eine Phase (19) hat.

10. Dichtungsanordnung nach einem der Ansprüche 1 bis 8, **dadurch gekennzeichnet, dass** die Welle (18) für den Montagevorgang stirnseitig mit einem konischen Führungskegel (20) versehen ist.
